# EUROPEAN PATENT APPLICATION

(11) **EP 2 487 426 A2**
(43) Date of publication of application: **15.08.2012**
(21) Application number: 12154737.6
(22) Date of filing: 09.02.2012
(51) Int. Cl.: F24D 3/14

(54) **Hose clamp**

(30) Priority: 10.02.2011 NL 2006174
(71) Applicant: Blok's Draadvorm Fabriek B.V., 2544 EH Den Haag (NL)
(72) Inventor: Blok, Johannes Philippus, 2693 AD 's-Gravenzande (NL)
(74) Representative: Ketelaars, Maarten F.J.M.

(57) **Abstract**

Hose clamp to be used in combination with a floor plate, such as a Lewis plate. The hose clamp consists of an upper body part provided with a recess for receiving an underfloor heating hose and a lower body part provided with two resilient legs which can be securely clamped in the groove of a Lewis plate. In this way, it is possible to provide temporary clamping for an underfloor heating hose when pouring the floor.

## Description

The present invention relates to a hose clamp and more particularly to a hose clamp which can be used in combination with a floor plate such as a Lewis plate.

When laying a floor which is to be poured, such as a floor made of concrete or another material which cannot resist bending at all or only to a limited degree, a so-called Lewis plate is often used in the case of a flexurally weak base, that is to say a plate having dovetail-shaped grooves. If the concrete material or another floor material is poured therein, a sufficiently stiff unit is produced after hardening to prevent the formation of cracks, as a result of movement of the base, in the floor which has been created in this way. Often, it is desirable to fit underfloor heating (or cooling) in such a floor and to this end, a hose is laid down onto the floor plate. Because this hose may start to float during pouring and, in addition, cannot easily be held in the U shape in which it was fitted due to its stiffness, hose clamps are used in the prior art to fix the hose, both to prevent floating during pouring and to maintain the horizontal position with respect to the floor plate in order thus to be able to delimit a U-shaped or differently configured loop. Such hose clamps are positioned in the floor plate by drilling holes and subsequently screwing or riveting, nailing and the like. Such an operation takes a considerable amount of time and is, in addition, accompanied by the risk of moisture seeping through the holes which have been made in the floor plate to sections situated at a lower level.

It is an object of the present invention to provide an improved hose clamp which can be used in a simple manner in the above-described floor plate.

This object is achieved by a hose clamp which comprises an upper body part and a lower body part, wherein said upper body part comprises a resilient enlargeable recess for receiving a hose in a clamping manner and the lower body part comprises clamping members which can resilient be moved between two positions, which clamping members can be moved between a first introduction position in which said clamping members have a smaller engagement surface and a second clamping position in which said clamping members have a larger engagement surface.

According to the present invention, the hose clamp is no longer fixed to the floor plate using screws or other fastening means, but it is attached by means of clamps. This means that the hose is clamped in the hose clamp and the hose clamp is in turn clamped onto the floor plate. As a result of the undercut trapezoidal shape of the floor plate, such a clamping attachment can be achieved in a very secure manner, that is to say without the risk of the hose starting to float during pouring or the hose following an undesirable path when a relatively tight (U-shaped) bend is laid.

The hose clamp may be made from any material and may be configured in any way. Thus, it is possible for it to be made from (resilient) plate material by punching. Another possibility is to make it from plastic by injection-moulding. According to a particular embodiment of the present invention, the hose clamp consists of a bent wire product.

In this case, it is possible to use both plastic and metallic material.

According to a particular embodiment of the present invention, the recess for the hose is provided with an insertion space. Thus, the hose clamp can be pushed onto the hose in a simple manner and does not have to be threaded through. Preferably, the recess is provided with a resilient part, so that the underfloor heating hose is securely accommodated.

According to a further advantageous embodiment of the invention, the engagement surface which ensures that the hose clamp is clamped to the floor plate is situated substantially at right angles to the plane of the recess.

The invention also relates to a combination consisting of an underfloor heating hose and the above-described hose clamp. In addition, the invention relates to an assembly comprising a floor plate and a hose clamp, which floor plate comprises a succession of trapezoidal undercut parallel grooves, wherein the hose clamp comprises an upper body part and a lower body part, wherein the upper body part comprises a resilient enlargeable recess for receiving a hose and the lower body part comprises clamping members which can resiliently be moved between two positions, wherein said lower body part, in a first introduction position, can be moved along the part with the smallest dimension of said grooves in said floor plate and said clamping members, in a second clamping position, engage with said undercut part of said groove and can be moved in said grooves along said part with the smallest dimension.

In this context, the term floor plate is to be understood as meaning the above-described Lewis plate and variants thereof, in which grooves are present in a floor structure for receiving the lower body part of the hose clamp according to the invention which provides clamping action therefor.

According to a further embodiment of the present invention, each clamping member which engages with the groove in the floor plate has a first and second end. The second end is configured to be particularly resilient and if two clamping members are present, the first ends are preferably closer together than the resilient second ends. The user can introduce the lower body part of the hose clamp in the groove of the floor plate, for example by moving the clamping members, such as engagement legs, apart and these then automatically rebound to the clamping position. The structure may obviously also work the opposite way, that is to say that the clamping members are moved towards one another before being introduced and then rebound into a clamped position.

If clamping members having first and second ends are used and two or more thereof are present, it is possible for the first or second ends, respectively, to engage in opposite longitudinal sides of the groove or are rotated by exactly 90 degrees with respect thereto, that is to say that the two second ends engage with opposite longitudinal sides of the groove.

For the purpose of improved engagement and improved positioning and stabilization of the hose clamp, it is preferred if second ends and first ends are present, and these second ends are provided with an upright part which furthermore engages with the dovetail-shaped part of the floor plate.

It will be understood that the various above-described particular embodiments of the hose clamp combination and the assembly can also be used with the combination, assembly and hose clamp. This means that all particular variants apply to all embodiments of the hose clamp combination and the assembly.

The invention will be explained below with reference to an exemplary embodiment which is illustrated in the drawing, in which:
Fig. 1 diagrammatically shows the hose clamp according to the invention used in combination with underfloor heating before a floor is poured;
Fig. 2 shows the structure according to Fig. 1 in longitudinal section;
Fig. 3 shows the hose clamp according to the present invention in the untensioned state; and
Fig. 4 shows the hose clamp according to the present invention in the tensioned, fitted state.

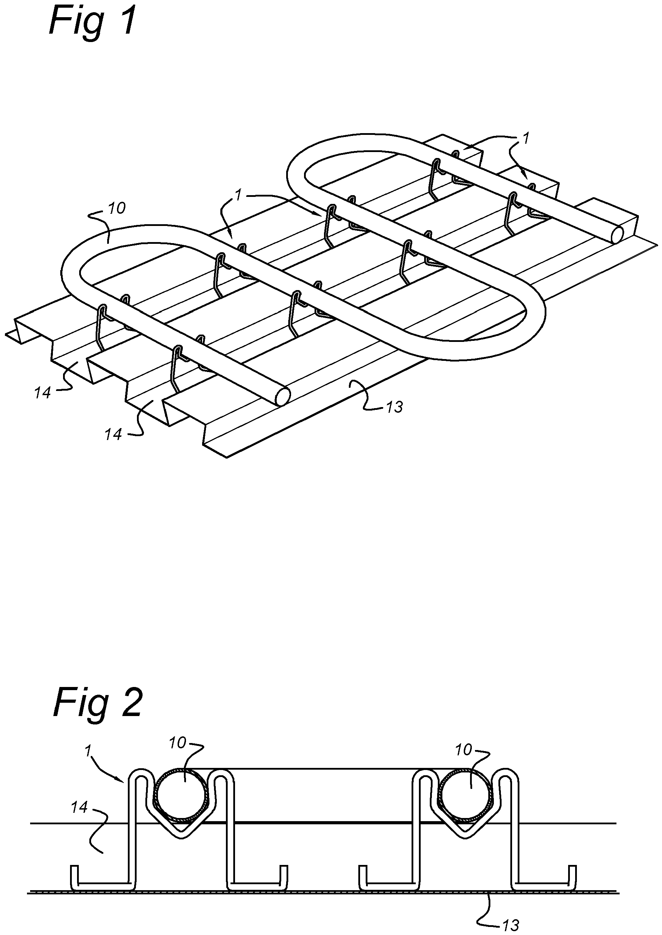

Fig. 1 shows a part of a floor structure consisting of a so-called dovetail plate or Lewis plate 13. This is a plate containing grooves 14 and which is particularly suitable for fitting further floor structure parts which form cracks when being bent due to the base not being flexurally stiff. An example thereof is a bathroom floor with ceramic tiles on a wooden subfloor. It is possible to produce a stable structure by fitting such a floor plate 13 on the underlying supporting structure and then pouring concrete or another material thereon. Such a structure is generally known in the prior art. In many cases, it is desirable to install an underfloor heating hose 10. This has to be fixed in order to prevent it from floating and to ensure accurate positioning.

According to the invention, a hose clamp 1 is used for this purpose as will be explained by means of the various Figs. 2-4.

The hose clamp 1 consists of an upper body part 2 provided with a recess 5. This recess 5 can be moved in the direction of the arrows 15 in order to receive hose 10. The recess 5 makes it possible to introduce the hose 10 from above. As a result thereof, it is possible, on the one hand, to provide the hose with a hose clamp in any desired position and consequently it is possible, on the other hand, to prevent the upper body part from protruding (substantially) above the hose, so that the amount of material to be poured on the top side of the floor plate 13 can be reduced as much as possible to just the thickness of the hose which has been fitted thereto. By means of the hose clamp, it is also possible to fit the hose tightly against the floor plate, but it is also possible to produce a small intermediate distance.

As a result of the rebounding action, the hose 10 is retained in a clamping manner.

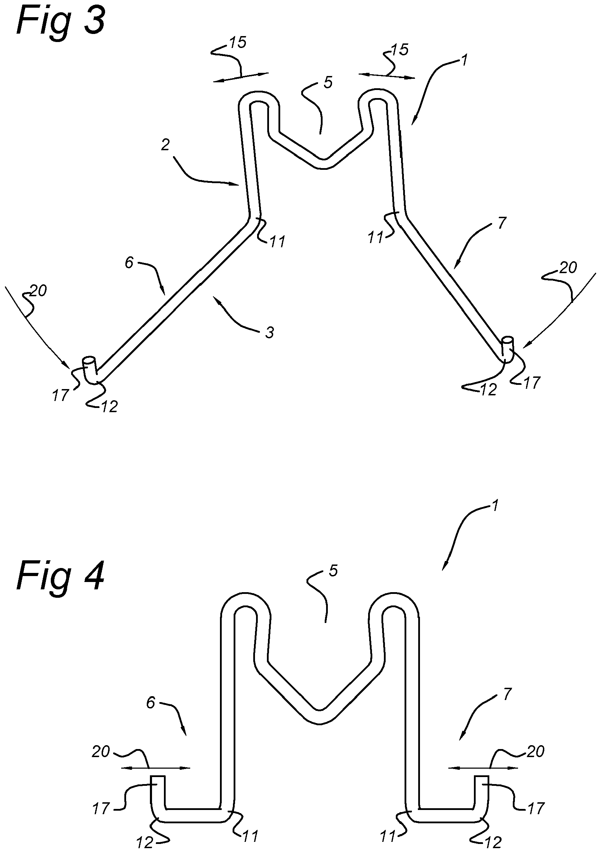

Joined to the upper body part is a lower body part 3. This is provided with engagement legs 6 and 7. Each leg has a first end 11 and a second resilient end 12. As can be seen by comparing Figs. 3 and 4, the resilient ends 12, starting from the untensioned position shown in Fig. 3, can be moved to the tensioned position shown in Fig. 4. The resilient ends 12 are provided with an upright part 17. As can be seen from Figs. 1 and 2, the hose clamp, starting from the position shown in Fig. 4, can be introduced via the narrowest part 9 of the dovetail-shaped opening. Subsequently, the engagement legs 6 and 7 rebound according to arrow 20 resulting in the stable position shown in Fig. 1 and 2 which is somewhere between the positions shown in Figs. 3 and 4.

The structure illustrated in the figure shows a hose clamp which is made from bent metal wire. This may be a simple steel material with a thickness of, for example, 2 mm.

It will be understood that instead of the bent metal wire illustrated here, it is possible to use other materials, such as wire material which has been produced by bending or punching or parts which have been produced by injection-moulding. In addition, it is possible to use combinations of the various abovementioned materials and variant embodiments of both the upper body part and the lower body part.

Upon reading the above, those skilled in the art will immediately be able to think of variants which are covered by the scope of the attached claims. In this case, rights are expressly requested for that which is described in the subclaims, separate from the associated independent claim.

## Claims

1. Hose clamp (1) comprising an upper body part (2) and a lower body part (3),
wherein said upper body part comprises a resilient enlargeable recess (5) for receiving a hose (10) in a clamping manner and the lower body part (3) comprises clamping members (6, 7) which can resiliently be moved between two positions, which clamping members can be moved between a first introduction position (Fig. 4) in which said clamping members have a smaller engagement surface and a second clamping position (Fig. 3) in which said clamping members have a larger engagement surface.

2. Hose clamp according to Claim 1, wherein said recess is provided with an insertion space (5).

3. Hose clamp according to one of the preceding claims, wherein said engagement surface (6, 7) is substantially at right angles to the plane of said recess (5).

4. Hose clamp according to one of the preceding claims, wherein said clamping members comprise resilient engagement legs (6, 7).

5. Hose clamp according to one of the preceding claims, made from spring metal.

6. Hose clamp according to one of the preceding claims, made from wire material.

7. Combination comprising an underfloor heating hose (10) and a number of hose clamps (1) fitted thereto, wherein each hose clamp comprises an upper body part and a lower body part, wherein said upper body part comprises a resilient enlargeable recess (5) for receiving a hose (10) in a clamping manner and the lower body part (3) comprises clamping members (6, 7) which can resiliently be moved between two positions, which clamping members can be moved between a first introduction position (Fig. 4) in which said clamping members have a smaller engagement surface and a second clamping position (Fig. 3) in which said clamping members have a larger engagement surface.

8. Combination according to Claim 7, wherein said underfloor heating hose (10) is curved to form a U shape and a hose clamp (1) is fitted on either side of said U.

9. Assembly comprising a floor plate (13) and a hose clamp (1), which floor plate comprises a succession of trapezoidal undercut parallel grooves (14), wherein the hose clamp (1) comprises an upper body part (2) and a lower body part (3), wherein the upper body part comprises a resilient enlargeable recess (5) for receiving a hose and the lower body part (3) comprises clamping members which can resiliently be moved between two positions, wherein said lower body part, in a first introduction position (Fig. 4), can be moved along the part with the smallest dimension of said grooves in said floor plate (13) and said clamping members, in a second clamping position, engage with said undercut part of said groove and can be moved in said grooves along said part with the smallest dimension.

10. Assembly according to Claim 9, wherein each clamping member comprises a first end (11) and a resilient second end (12), wherein two clamping members are present, the first ends (11) of which are closer together than the resilient second ends (12).

11. Assembly according to Claim 10, wherein the second ends engage with a longitudinal side of said grooves.

12. Assembly according to Claim 10 or 11, wherein said upper body part is connected to said first ends.

13. Assembly according to one of Claims 10-12, wherein said second ends (12) are provided with an upright part (17).
